# FASCICULE DE BREVET EUROPEEN

(11) **EP 0 490 753 B1**
(45) Date de publication et mention de la délivrance du brevet: **12.06.1996**
(21) Numéro de dépôt: 91403335.2
(22) Date de dépôt: 10.12.1991
(51) Int. Cl.: G01T 1/00, G01T 1/178, G01T 7/00

(54) **Appareil de mesure de la contamination radioactive d'un corps**
Vorrichtung zur Messung der Strahlungsverseuchung von Objekten
Apparatus for measuring the radioactive contamination of an object

(30) Priorité: 11.12.1990 FR 9015485
(43) Date de publication de la demande: 17.06.1992
(73) Titulaire: ETAT FRANCAIS Représenté par le délégué général pour l'armement, F-00460 Armées (FR); COMMISSARIAT A L'ENERGIE ATOMIQUE, F-75015 Paris (FR)
(72) Inventeur: Augier, Patrick, F-75014 Paris (FR); Fouquet, Paul-Henri, F-75005 Paris (FR); Chapuis, Jean-Claude, F-91430 Igny (FR); Chemtob, Maurice, F-94000 Creteil (FR); Chuiton, René, F-92140 Clamart (FR)

(56) Documents cités:
- EP-A- 0 197 786
- EP-A- 0 313 716
- IEEE TRANS ON NUCLEAR SCIENCE vol. 35, no. 1, Février 1988, NEW YORK USA pages 222 - 225 DRNDAREVIC ET AL 'a signal processor for high counting rate gamma ray spectroscopy with NaI(T1) detectors'

## Description

La présente invention est relative à un appareil de mesure de la contamination radioactive d'un corps tel qu'un produit alimentaire et, plus particulièrement, à un tel appareil procédant à partir du rayonnement γ résultant de la désintégration d'un ou plusieurs radioéléments ayant contaminé le corps.

On connaît des appareils permettant de mesurer les divers rayonnements, α, β, γ émanant de contaminants radioactifs, pour le but de détecter et de rebuter des produits alimentaires dont le niveau de contamination est tel que l'ingestion par l'homme de ces produits pourrait être dangereuse à celui-ci. Si ces appareils remplissent correctement leur office, leur sensibilité au rayonnement γ est souvent insuffisante.

On connaît aussi un appareil de mesure de l'activité "γ" fabriqué par la Société BERTHOLD (RFA) et vendu sous le nom de "BECQUEREL-MONITOR LB 200". Cet appareil comprend un scintillateur à cristal d'iodure de sodium associé à un photomultiplicateur qui exige une alimentation électrique haute tension. Une telle alimentation est coûteuse, lourde et encombrante et donc non portative. En outre, l'appareil procède à partir d'échantillons de produits qu'il faut détruire par broyage pour les préparer aux mesures à opérer.

Le brevet EP 0313716 décrit un appareil de mesure de doses d'irradiation déterminant précisément les raies du rayonnement γ spécifiques d'un radioélément comprenant un détecteur à scintillateur produisant des photons, un photomultiplicateur qui génère des impulsions électriques proportionnellement à l'énergie des rayons γ et un amplificateur de signal couplé à un convertisseur numérique couplé lui-même à une mémoire de stockage . Les données sont ensuite traitées par une unité centrale, qui identifie les radioéléments émetteurs. Les résultats se présentent sous forme de spectre de rayonnement et sont affichés sur écran ou bien imprimés.

La présente invention a pour but de réaliser un appareil de mesure de la contamination par des radio-éléments d'un corps tel qu'un produit alimentaire, qui quantifie cette contamination, et qui ne présente pas les inconvénients de l'état de la technique précité. Il est donc facile d'emploi, léger et peu volumineux pour être portatif, à alimentation électrique autonome par piles du commerce, robuste et de réalisation peu coûteuse de manière à être accessible au "grand public". Un tel appareil est très utile notamment en cas d'accident nucléaire de grande envergure, du fait qu'il permet alors à un grand nombre de personnes de s'assurer de l'innocuité de tel ou tel aliment éventuellement contaminé, directement sur le terrain, grâce au caractère portatif de l'appareil.

La présente invention a aussi pour but de réaliser un tel appareil qui laisse intact les produits soumis aux mesures.

On atteint ces buts del'invention, ainsi que d'autres qui apparaîtront à la lecture de la description qui va suivre, avec un appareil de mesure de la radioactivité d'un corps, à partir de particules γ émises par au moins un radioélément, du type comprenant un détecteur à scintillateur sensible à ces particules γ pour émettre en retour des photons. Suivant l'invention, l'appareil comprend :
a) une photodiode agencée de manière à collecter lesdits photons émis par le scintillateur et à les convertir en charges électriques,
b) des moyens pour convertir lesdites charges en impulsions électriques,
c) un amplificateur de tension connecté à la sortie de la photodiode pour délivrer des impulsions de tension d'amplitude proportionnelle à l'énergie des particules γ détectées par le scintillateur,
d) des moyens pour classer les impulsions dans plusieurs bandes d'énergie prédéterminées et pour compter les impulsions reçues dans chaque bande pendant un temps prédéterminé, et
e) des moyens pour calculer, à partir de ces comptages, la contamination en Becquerel/Kg du corps par ledit radioélément.

L'utilisation dans l'appareil selon l'invention d'une photodiode d'un type particulier qui sera décrit en plus de détail dans la suite, permet de se passer d'un photomultiplicateur sensible aux variations du champ électromagnétique et de son alimentation coûteuse, lourde et encombrante.

Le classement des impulsions dans plusieurs bandes d'énergie prédéterminée permet de réaliser une spectrométrie simplifiée de ces impulsions par des comptages d'impulsions dans ces bandes.

Suivant une autre caractéristique de l'appareil selon l'invention, les moyens de calcul comprennent des moyens pour déconvoluer les comptages réalisés et pour mesurer ainsi séparément les contaminations dudit corps dues à chaque radioélément d'une pluralité de tels éléments tels que l'iode, le cobalt et le césium. Ce sont ces radioéléments que l'on retrouve souvent dans les produits contaminés par des substances radioactives.

Suivant encore une autre caractéristique de l'appareil selon l'invention, celui-ci comprend des moyens d'affichage de la contamination d'un corps placé devant le scintillateur, radioélément par radioélément.

L'appareil comprend encore des moyens de sélection de paramètres de calcul de la contamination d'un corps particulier présenté devant le scintillateur, de manière à permettre l'affichage de la contamination du corps en Becquerel par unité de masse ou de volume du corps contaminé. Des moyens sont prévus pour comparer les contaminations calculées à des seuils, des moyens d'alarme sonore ou visuelle étant alors déclenchés quand l'un au moins des seuils en mémoire est dépassé.

L'appareil est alimenté électriquement par des piles logées dans une poignée permettant de transporter facilement l'appareil.

D'autres caractéristiques et avantages de l'appareil selon la présente invention apparaîtront à la lecture de la description qui va suivre et à l'examen du dessin annexé dans lequel :
- la figure 1 est un schéma en coupe de l'appareil suivant l'invention,
- la figure 2 est un schéma d'un panneau de commande et d'affichage prévu à l'arrière du boîtier de l'appareil de la figure 1, et
- la figure 3 est un diagramme fonctionnel utile à la compréhension du fonctionnement de l'appareil selon l'invention.

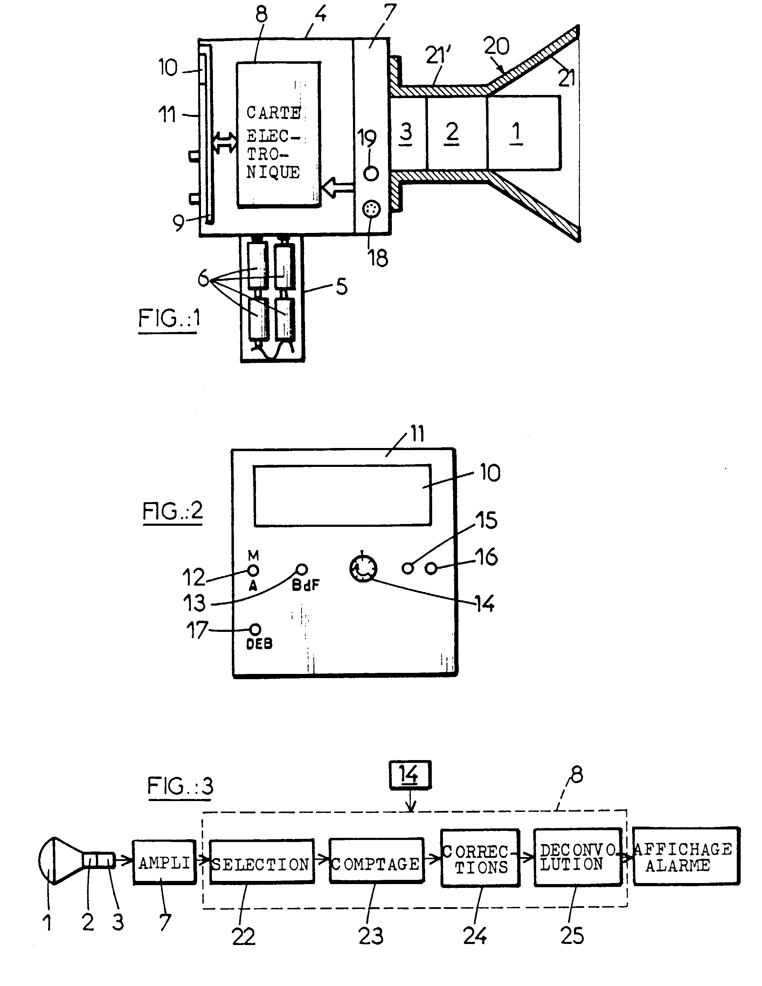

On se réfère à la figure 1 du dessin annexé où il apparaît que cet appareil prend la forme générale d'une caméra de prise de vues comprenant, en lieu et place de l'objectif, un détecteur de rayonnement γ constitué par un scintillateur 1 accolé, suivant l'invention, à une photodiode 2 elle-même associée à un préamplificateur 3, l'ensemble (1, 2, 3) étant placé à l'avant d'un boîtier 4 muni d'une poignée 5 permettant de transporter l'appareil. Avantageusement, suivant l'invention, des piles électriques 6 sont logées dans la poignée 5 pour assurer une alimentation électrique autonome de l'appareil.

Le boîtier 4 contient un amplificateur de tension 7, de préférence blindé et alimenté par des impulsions délivrées par le préamplificateur 3, la sortie de l'amplificateur alimentant une ou plusieurs cartes électroniques 8 comportant, suivant l'invention, des moyens d'alimentation électrique de ces cartes, des moyens de mise en forme des impulsions délivrées par l'amplificateur, des moyens de classement et de comptage de ces impulsions et des moyens de calcul exploitant ces comptages pour en tirer des informations relatives à l'éventuelle contamination d'un corps présenté devant le scintillateur, en un ou plusieurs radioéléments. L'appareil est complété par une carte 9 de commande d'un écran d'affichage 10 où apparaissent lesdites informations.

Sur la figure 2 on a représenté la face arrière 11 du boîtier 4, face sur laquelle sont implantés, outre l'écran 10 mentionné ci-dessus, divers organes nécessaires à la commande de l'appareil. Ceux-ci comprennent un bouton poussoir 12 de commande de l'alimentation électrique de l'appareil (bouton marche/arrêt, M/A), un bouton poussoir 13 de commande de la mesure du bruit de fond (BdF), un sélecteur 14 rotatif, mobile entre plusieurs positions angulaires associées chacune à la nature d'un corps soumis aux mesures, des diodes électroluminescentes 15, 16 et un bouton poussoir 17 pour déclencher l'acquisition de comptages, qui seront décrits en plus de détail dans la suite. De manière optionnelle, l'appareil peut être complété (voir figure 1) par une prise 18 de connexion de la sortie de l'amplificateur 7 à un spectromètre de laboratoire et par un bouton 19 de réglage du gain de cet amplificateur, pour des buts qui seront également expliqués dans la suite de la présente description.

Suivant un mode de réalisation particulier de l'invention, donné seulement à titre d'exemple, le détecteur 1 prend la forme d'un scintillateur constitué par un cristal d'iodure de césium taillé à la demande et vendu par la Société HARSAW, QUARTZ & SILICE HOLLAND (PAYS-BAS). Ce cristal peut être volumineux, de l'ordre de 7 cm³ par exemple et il est accolé, sur l'une de ses faces, à une photodiode 2 de surface sensible importante (de l'ordre de 3 cm² par exemple) telle que la photodiode vendue par la Société HAMAMATSU (JAPON) sous le numéro S 3204-03. La Société HARSAW précitée fournit d'ailleurs le cristal scintillateur 1, la photodiode 2 et un préamplificateur 3 du signal délivré par la photodiode, comme un tout constituant un détecteur utilisable dans l'invention.

Le signal de sortie du préamplificateur 3 est fourni à l'amplificateur 7 qui, suivant l'invention, est un amplificateur de tension à bande passante étroite. Cette bande est adaptée au scintillateur et optimise le rapport signal/bruit.

On se réfère au diagramme fonctionnel de l'appareil suivant l'invention représenté à la figure 3 pour expliquer en plus de détail le traitement et l'exploitation des signaux de sortie de l'amplificateur 7 par des moyens électroniques réunis sur les cartes 8. Du point de vue matériel, ces moyens comprennent essentiellement un microprocesseur et des mémoires associées (non représentés), ce microprocesseur étant convenablement programmé pour exécuter des calculs exigés par les mesures de contamination radioactive à effectuer et pour commander tant la saisie par l'appareil des signaux émis par la photodiode que l'affichage des mesures obtenues ou l'excitation de moyens de visualisation tels que la diode électroluminescente 15 ou d'alarme telle que la diode 16.

L'appareil suivant l'invention est conçu pour équiper individuellement un grand nombre de personnes se trouvant dans une zone contaminée par des produits radioactifs. Il s'agit alors pour ces personnes de contrôler la radioactivité de divers corps tels que des produits alimentaires par exemple, avant de décider de leur consommation. Pour ce faire, l'extrémité du détecteur (1, 2, 3) de l'appareil est plaquée contre une surface du produit à contrôler, une salade par exemple, à travers un sac protecteur évitant la contamination de l'appareil. Le rayonnement γ résultant de la contamination du produit en radioélément et traversant la surface de contact est alors capté par le cristal scintillateur 1 du détecteur, où son rayonnement interagit avec le cristal pour produire une cascade d'ionisations et d'excitations qui provoquent une émission de photons lumineux captés par la photodiode 2. Celle-ci transforme alors cette émission en une charge électrique convertie en impulsion de tension par le préamplificateur 3. L'amplitude de l'impulsion est proportionnelle à l'énergie lumineuse émise par l'interaction de chaque particule γ avec le milieu scintillateur.

On remarquera incidemment (sur la figure 1) que l'appareil est équipé d'un écran 20 comprenant une partie conique 21 d'extrémité et une partie cylindrique 21′ pour fixer cet écran, éventuellement de manière amovible, sur le détecteur (1, 2, 3). L'écran 20 permet de protéger le cristal scintillateur 1 du rayonnement γ ambiant et sert de blindage contre les champs électromagnétiques créés par les moyens électroniques 8 utilisés. Sa partie conique 21 délimite aussi un angle solide fixe dans lequel s'opère une rétrodiffusion qui accroît la sensibilité de la détection.

On se réfère de nouveau à la figure 3 pour décrire et expliquer les fonctions exécutées par l'électronique de la carte 8. Les impulsions de tension délivrées par le préamplificateur 3 étant filtrées comme indiqué ci-dessus et amplifiées dans l'amplificateur à bande étroite 7, sont traitées par des moyens 22 de classement de ces impulsions de tension, en fonction de leur amplitude, dans l'une ou l'autre de plusieurs bandes d'énergie choisies de manière à permettre la séparation par déconvolution des contributions respectives de plusieurs radioéléments, iode, césium, cobalt par exemple, dans la génération des impulsions de tension délivrées par l'amplificateur.

On sait en effet que le spectre dN/dE = f(E), dN étant le nombre d'impulsions dans l'intervalle dE et E l'énergie de l'impulsion, pour un rayonnement d'énergie donnée, présente, outre une bosse due à l'effet Compton, un pic dû à l'effet photoélectrique, caractéristique de l'énergie de la particule γ considérée. En choisissant les bandes d'énergie mentionnées ci-dessus de manière à isoler ces pics, des comptages d'impulsions dans ces bandes permettront, en tenant compte des contributions connues de deux des trois radioéléments (I, Cs, Co) dans le nombre d'impulsions décomptées dans la bande du pic du troisième, de connaître la part de ce compte qui est due à ce troisième radioélément. On en déduit la contamination du corps contrôlé avec l'appareil suivant l'invention, en ce troisième radioélément. On opère ainsi avec chaque radioélément pour calculer la contamination du corps par les trois radioéléments.

Outre les moyens de classement, les moyens électroniques de l'appareil comprennent des moyens 23 propres à compter, pendant un temps prédéterminé réglé par le microprocesseur, les impulsions classées dans les bandes d'énergie prédéterminées. A titre d'exemple non limitatif, les comptages sont opérés dans les bandes suivantes :
- une bande large englobant toutes les autres (de 135 à 1500 kev),
- une bande correspondant au pic du césium (autour de 661 kev),
- une bande correspondant aux pics du cobalt (autour de 1250 kev),
- une bande correspondant au pic de l'iode (autour de 360 kev).

Les comptages réalisés sont traités dans des moyens 24 assurant des corrections de "temps mort" et de bruits de fond classiques. Des moyens de déconvolution 25 calculent, à partir des quatre comptages corrigés, les contaminations du corps contrôlé en chacun des radioéléments recherchés.

Pratiquement, l'appareil suivant l'invention fonctionne comme suit. Après mise sous tension à l'aide du bouton-poussoir 12, on actionne le bouton 13 pour faire une mesure de bruit de fond (BdF) qui est mise en mémoire. C'est seulement après cette mise en mémoire que la face avant du scintillateur 1 formant partie du détecteur (1, 2, 3) est appliqué contre le corps à contrôler. On affiche alors à l'aide du sélecteur 14, la nature de ce corps, une salade dans l'exemple mentionné ci -dessus. Cette sélection fait entrer dans les moyens de calcul des paramètres de correction qui permettent à ces moyens, de déduire des mesures et calculs opérés, une contamination de la salade en Becquerel/kg. Des mesures analogues pourraient être réalisées en Becquerel/litre, par exemple pour des flacons de lait.

L'opérateur appuie alors sur le bouton 17 (DEB) pour lancer l'acquisition des quatre comptages mentionnés ci-dessus, pendant un temps mesuré par le microprocesseur, de 100 s par exemple. La diode 15 s'illumine alors comme témoin de cette acquisition. Les quatre comptages sont mis temporairement en mémoire, corrigés comme indiqué ci-dessus et soumis à des calculs qui déterminent la contamination totale de la salade et sa contamination radioélément par radioélément. Ces mesures sont affichées sur l'écran 10. Lorsque ces contaminations dépassent des seuils prédéterminés, des moyens de comparaison intégrés aux moyens de calcul commandent l'affichage sur l'écran 10 du message "CONTAMINE" et l'allumage de la diode 16 d'alarme visuelle. Bien entendu cette alarme pourrait être remplacée ou complétée par une alarme sonore.

Grâce aux comptages opérés comme décrits ci-dessus, l'appareil suivant l'invention réalise en quelque sorte une spectrométrie simplifiée permettant de réduire l'encombrement de l'électronique nécessaire. Pour contrôler éventuellement au laboratoire, à l'aide d'un spectromètre classique, les mesures réalisées avec l'appareil, on peut connecter la sortie de l'amplificateur 7 à ce spectromètre, à l'aide de la prise 18.

L'appareil suivant l'invention se prête à l'utilisation de détecteurs (1, 2, 3) interchangeables, pour une meilleure adaptation à telle ou telle application. Les caractéristiques de ces détecteurs pouvant alors être différentes, on adapte le gain de l'amplificateur à l'aide du bouton de réglage 19, en fonction du détecteur choisi.

Comme on l'a vu plus haut, l'écran de protection 20 peut être amovible. Il existe en effet un flacon normalisé, référencé GTN5 et mis au point par le COMMISSARIAT A L'ENERGIE ATOMIQUE, conçu pour enfermer des produits à soumettre à des mesures de contamination radioactive. Grâce à ce flacon, de volume déterminé, on peut procéder à des mesures comparatives rigoureuses. Le flacon comprend un logement dans lequel doit être inséré un détecteur, tel que celui de l'appareil suivant l'invention par exemple. Il faut alors retirer l'écran 20 pour permettre cette insertion.

Il apparaît maintenant que l'appareil suivant l'invention permet d'atteindre tous les buts qui avaient été fixés, étant de fabrication peu coûteuse, d'emploi facile, d'alimentation autonome, léger et peu encombrant donc très portatif, et robuste. Ces caractéristiques et ces avantages en font un appareil plus particulièrement, mais non exclusivement, destiné au grand public.

Bien entendu, l'invention n'est pas limitée au mode de réalisation décrit et représenté qui n'a été donné qu'à titre d'exemple. Ainsi on pourrait utiliser, en lieu et place du cristal scintillateur d'iodure de césium, un scintillateur à cristal d'iodure de sodium, par exemple ou un autre détecteur.

## Revendications

1. Appareil de mesure de la radioactivité d'un corps, à partir de particules γ émises par au moins un radioélément, du type comprenant un détecteur à scintillateur (1) sensible à ces particules γ pour émettre en retour des photons, comprenant :
a) une photodiode (2) agencée de manière à collecter les photons émis par le scintillateur et à les convertir en charges électriques,
b) des moyens (3) pour convertir lesdites charges en impulsions électriques,
c) un amplificateur de tension (7) connecté à la sortie de la photodiode pour délivrer des impulsions de tension d'amplitude proportionnelle à l'énergie des particules γ détectées par le scintillateur
d) des moyens (22) pour classer les impulsions dans plusieurs bandes d'énergie prédéterminées et pour compter les impulsions reçues dans chaque bande pendant un temps prédéterminé,
caractérisé en ce qu'il comporte des moyens (8) pour calculer, à partir de ces comptages, la contamination en Becquerel/Kg du corps par ledit radioélément.

2. Appareil conforme à la revendication 1, caractérisé en ce que les moyens de calcul (8) comprennent des moyens (25) pour déconvoluer les comptages et pour mesurer ainsi séparément les contaminations dudit corps dues à chaque radioélément d'une pluralité de tels éléments.

3. Appareil conforme à la revendication 2 caractérisé en ce que lesdits moyens de déconvolution (25) séparent les contaminations dudit corps par des radioéléments du groupe formé par : l'iode, le cobalt et le césium.

4. Appareil conforme à la revendication 3 caractérisé en ce qu'il comprend des moyens d'affichage (10) de la contamination d'un corps placé devant le scintillateur (1), radioélément par radioélément.

5. Appareil conforme à la revendication 4, caractérisé en ce qu'il comprend des moyens de sélection (14) de paramètres de calcul de la contamination d'un corps particulier présenté devant le scintillateur (1), de manière à permettre l'affichage de la contamination du corps en Becquerel par unité de masse ou de volume du corps contaminé.

6. Appareil conforme à la revendication 5, caractérisé en ce qu'il comprend des moyens de mémoire chargés avec des seuils de contamination et des moyens pour comparer les contaminations calculées à ces seuils, des moyens d'alarme (16) sonore ou visuelle étant déclenchés quand l'un au moins des seuils en mémoire est dépassé.

7. Appareil conforme à la revendication 2, caractérisé en ce que les moyens de calcul comprennent des moyens de correction (24) de temps mort et de bruit de fond.

8. Appareil conforme à la revendication 1, caractérisé en ce que le scintillateur (1) est constitué par un cristal taillé du groupe formé par l'iodure de césium et l'iodure de sodium.

9. Appareil conforme à la revendication 1, caractérisé en ce que la photodiode (2) est du type à surface étendue.

10. Appareil conforme à la revendication 1, caractérisé en ce que les moyens pour convertir en impulsions les charges électriques développées dans la photodiode sont constitués par un préamplificateur (3) associé à cette photodiode.

11. Appareil conforme à la revendication 1, caractérisé en ce que l'amplificateur de tension est à bande passante étroite pour optimiser le rapport signal/bruit.

12. Appareil conforme à l'une quelconque des revendications précédentes, caractérisé en ce que les moyens de calcul comprennent un microprocesseur chargé de programmes de calcul, ce microprocesseur étant également programmé pour gérer les temps de comptage.

13. Appareil conforme à la revendication 10, caractérisé en ce que l'ensemble scintillateur-photodiode-préamplificateur constitue un détecteur (1, 2, 3) interchangeable avec d'autres détecteurs du même type de caractéristiques différentes, l'amplificateur (7) étant alors muni de moyens de réglage de gain (19) pour l'adaptation de cet amplificateur au détecteur installé sur l'appareil.

14. Appareil conforme à l'une quelconque des revendications précédentes, caractérisé en ce qu'il comprend des moyens (18) pour connecter la sortie de l'amplificateur à un spectomètre extérieur à l'appareil.

15. Appareil conforme à l'une quelconque des revendications précédentes, caractérisé en ce qu'il comprend un écran (20) de protection du scintillateur contre le rayonnement ambiant et contre d'autres sources de rayonnement susceptibles de parasiter les mesures, cet écran étant monté amoviblement autour du scintillateur pour autoriser, après retrait, l'installation d'un flacon de mesure du type GTN5 sur ce scintillateur.

16. Appareil conforme à l'une quelconque des revendications précédentes, caractérisé en ce qu'il est portatif et alimenté électriquement par des piles (6) logées dans une poignée (5).

## Patentansprüche

1. Gerät zum Messen der Radioaktivität eines Körpers, ausgehend von von mindestens einem Radioelement ausgestrahlten γ-Teilchen, bestehend aus einem diesen γ-Teilchen gegenüber empfindlichen Szintillationskristall-Detektor (1) zur Rückstrahlung von Photonen, einschließlich:
a) eine Photodiode (2), so ausgerichtet, daß sie die vom Szintillationskristall ausgestrahlten Photone sammeln und in elektrische Ladungen umwandeln kann,
b) Vorrichtungen (3), um diese elektrischen Ladungen in elektrische Impulse umzuwandeln,
c) ein an den Ausgang der Photodiode angeschlossenen Spannungsverstärker (7), um Spannungsimpulse zu liefern, deren Amplitude proportional zur Energie der vom Szintillationskristall gemessenen γ-Teilchen ist,
d) Vorrichtungen (22) zum Ordnen der Impulse in mehreren vorbestimmten Energiebändern und zum Zählen der in jedem Band während einer vorbestimmten Zeitspanne empfangenen Impulse,
dadurch gekennzeichnet, da§ es Vorrichtungen (8) enthält, welche ausgehend von diesen Zählungen die Kontamination des Körpers durch das eingangs genannte Radioelement in Becquerel/kg errechnet.

2. Gerät entsprechend Patentanspruch 1, dadurch gekennzeichnet, daß die Rechenvorrichtungen (8) Vorrichtungen (25) zum Zerlegen der Zählungen und somit zum separaten Messen der Kontaminationen dieser Körper durch jedes Radioelement einer Pluralität solcher Elemente enthalten.

3. Gerät entsprechend Patentanspruch 2, dadurch gekennzeichnet, daß die vorangehend genannten Zerlegungsvorrichtungen (25) die Kontaminationen des Körpers durch Radioelemente der von lod, Kobalt und Cäsium gebildeten Gruppe trennt.

4. Gerät entsprechend Patentanspruch 3, dadurch gekennzeichnet, daß es Anzeigevorrichtungen (10) für die Kontamination eines vor den Szintillationskristall (1) positionierten Körpers pro Radioelement enthält.

5. Gerät entsprechend Patentanspruch 4, dadurch gekennzeichnet, daß es Wahlvorrichtungen (14) für die Berechnungsparameter der Kontamination eines bestimmten vor dem Szintillationskristall (1) präsentierten Körpers enthält, um die Anzeige der Kontamination des Körpers in Becquerel pro Masseneinheit oder Volumen des verseuchten Körpers zu ermäglichen.

6. Gerät entsprechend Patentanspruch 5, dadurch gekennzeichnet, daß es mit Kontaminationsgrenzwerten gespeiste Speichervorrichtungen sowie Vorrichtungen zum Vergleichen der errechneten Kontaminationen mit diesen Grenzwerten enthält, wobei akustische oder optische Alarmvorrichtungen (16) ausgeläst werden, wenn mindestens einer der gespeicherten Grenzwerte überschritten wird.

7. Gerät entsprechend Patentanspruch 2, dadurch gekennzeichnet, daß die Rechenvorrichtungen Korrekturvorrichtungen (24) der Totzeiten und der Grundgeräusche enthält.

8. Gerät entsprechend Patentanspruch 1, dadurch gekennzeichnet, daß der Szintillatorkristall (1) aus einem aus der vom Cäsiumiodid und vom Natriumiodid gebildeten Gruppe geschliffenen Kristall besteht.

9. Gerät entsprechend Patentanspruch 1, dadurch gekennzeichnet, daß die Photodiode (2) eine große Oberfläche aufweist.

10. Gerät entsprechend Patentanspruch 1, dadurch gekennzeichnet, daß die Vorrichtungen zur Umwandlung der in der Photodiode entwickelten elektrischen Ladungen in Impulse aus einem an diese Photodiode angeschlossenen Vorverstärker (3) bestehen.

11. Gerät entsprechend Patentanspruch 1, dadurch gekennzeichnet, daß der Spannungsverstärker ein schmales Frequenzband aufweist, um das Signal-Rauschverhältnis zu optimieren.

12. Gerät entsprechend irgendeinem der vorangehenden Patentansprüche, dadurch gekennzeichnet, daß die Rechenvorrichtungen einen mit Rechenprogrammen gespeisten Mikroprozessor umfassen, wobei dieser Mikroprozessor ebenfalls für die Verwaltung der Zählungszeit programmiert ist.

13. Gerät entsprechend Patentanspruch 10, dadurch gekennzeichnet, daß die Einheit Szintillationskristall-Photodiode-Vorverstärker einen Detektor (1, 2, 3) bildet, welcher mit anderen Detektoren des gleichen Typs, jedoch mit unterschiedlichen Eigenschaften, austauschbar ist, wobei der Verstärker (7) dementsprechend mit Einstellvorrichtungen des Verstärkungsfaktors (19) ausgestattet ist, um diesen Verstärker an den am Gerät montierten Detektor anzupassen.

14. Gerät entsprechend irgendeinem der vorangehenden Patentansprüche, dadurch gekennzeichnet, daß es Vorrichtungen (18) für den Anschluß des Ausgangs des Versträkers an einen externen Spektometer enthält.

15. Gerät entsprechend irgendeinem der vorangehenden Patentansprüche, dadurch gekennzeichnet, daß es einen Schutzschirm (20) des Szintillationskristalls gegen die umgebenden Strahlungen und gegen andere eventuell die Messungen stärende Strahlungsquellen enthält; dieser Schutzschirm ist abnehmbar um den Szintillationskristall montiert, um nach seiner Abnahme das Anbringen einer Meßflasche Typ GTN5 auf diesem Szintillationskristall zu ermöglichen.

16. Gerät entsprechend irgendeinem der vorangehenden Patentansprüche, dadurch gekennzeichnet, daß es tragbar ist und elektrisch über in einem Griff (6) untergebrachte Batterien (6) versorgt wird.

## Claims

1. A device for measuring the radioactive contamination of a body, using gamma particles emitted by at least (1) one radioactive element, having a scintillation detector sensitive to gamma particles which emits photons in response, comprising :
a) a photodiode (2) designed to collect the photons emitted by the scintillator and convert them into electrical charges ;
b) means (3) for converting the electrical charges into electric pulses ;
c) a voltage amplifier (7) connected to the output of the photodiode to deliver voltage pulses with an amplitude proportional to the energy of the amma particles detected by the scintillator ;
d) means (22) for classifying the voltage pulses into several predetermined energy bands and counting the voltage pulses received in each band for a predetermined period of time characterised in that it comprises means (8) for calculating from these counts, the contamination in Becquerel per kg of the body by each radioactive element.

2. A device according to claim 1, wherein means (8) for calculating includes means (25) for deconvoluting the counts and thus separately measuring the contamination of the body by each radioactive element of a plurality of radioactive elements.

3. A device according to claim 2, wherein means (25) for deconvoluting separates the contaminations of the body by radioactive elements from the group consisting of iodine, cobalt, and cesium.

4. A device according to claim 3, further comprising means (10) for displaying the contamination of the body placed in front of the scintillator (1) by individual radioactive elements.

5. A device according to claim 4, further comprising means (14) for selecting parameters to calculate the contamination of the body presented in front of the scintillator (1) in order to display the contamination of the body in becquerels per unit mass or unit volume of the contaminated body.

6. A device according to claim 5, further comprising means for storing contamination thresholds, means for comparing the calculated contaminations to theses thresholds, and an audible or visual alarm mechanism (16), which is triggered when at least one of the thresholds in memory is exceeded.

7. A device according to claim 2, wherein the calculator includes means (24) for correcting for dead time and background noise.

8. A device according to claim 1, wherein the scintillator (1) comprises a cut crystal of cesium iodide or sodium iodide.

9. A device according to claim 1, wherein the photodiode (2) has an extensive surface area.

10. A device according to claim 1, wherein means for converting the electrical charges into pulses comprises a preamplifier (3) associated with the photodiode.

11. A device according to claim 1, wherein the voltage amplifier is of the narrow passband type to optimize the signal to noise ratio.

12. A device according to any of preceding claims wherein means for calculating includes a microprocessor loaded with calculation programs, said microprocessor also being programmed to generate the counting times.

13. A device according to claim 10, wherein an assembly of the scintillator, the photodiode and a preamplifier forms a replaceable detector (1,2,3) and the amplifier (7) is fitted with an adjuster (19) for adjusting the gain to adapt the amplifier to the detector installed in the device.

14. A device according to any of preceding claims, further comprising means (18) connecting the amplifier output to a spectrometer external to the device;

15. A device according to any of preceding claims, further comprising a screen (20) to protect the scintillator against background radiation and other sources of radiation that might interfere with the measurements, the screen being removably mounted around the scintillator to allow a measuring bottle of the GTN5 type to be mounted on the scintillator.

16. A device according to any of preceding claims being portable and being powered by batteries (6) accommodated in a handle (5) coupled to the body of the device.
